# EUROPEAN PATENT SPECIFICATION

(11) **EP 1 841 470 B1**
(45) Date of publication and mention of the grant of the patent: **17.02.2010**
(21) Application number: 04809204.3
(22) Date of filing: 29.12.2004
(51) Int. Cl.: A61L 15/42

(54) **METHOD FOR LAMINATING PLIES OF PLY-BONDED TISSUE PAPERS**
VERFAHREN ZUR LAMINIERUNG VON SCHICHTEN VON VERBUNDENEN PAPIERTUCHLAGEN
PROCÉDÉ POUR STRATIFIER LES COUCHES DE PAPIERS DE SOIE MULTICOUCHES

(43) Date of publication of application: 10.10.2007
(73) Proprietor: SCA Hygiene Products AB, 405 03 Göteborg (SE)
(72) Inventor: SCHINKOREIT, Wolfram, 69483 Wald-Michelbach (DE); ZÖLLER, Günther, 69198 Schriesheim (DE); WERNER, Martin, 73466 Lauchheim (DE)
(74) Representative: Egeröd, Lisbeth
(86) International application number: PCT/SE2004/002031
(87) International publication number: WO 2006/071147

(56) References cited:
- DE-A1- 19 732 735
- US-A- 4 806 418
- US-A- 4 867 831
- US-A- 5 173 351
- US-A1- 2002 146 561

## Description

### Technical Field

The invention relates to a multi-ply tissue paper and a method for manufacturing a multi-ply tissue paper by laminating at least two intermediary plies of which at least one of the intermediary plies is a ply-bonded tissue paper web.

### Background of the invention

The product of a multi-ply tissue paper is often a hygiene or wiping product that primarily comprises all kinds of dry-creped tissue paper, as well as wet-creped tissue paper and cellulose or pulp wadding, or combinations, laminates or mixtures thereof. Typical properties of tissue include the ready ability to absorb tensile stress energy, their drapability, good textile-like flexibility, properties which are frequently referred to as bulk softness, a high surface softness, a high specific volume with a perceptible thickness. As high a liquid absorbency as possible and, depending on the application, a suitable wet and dry strength as well as an interesting visual appearance of the outer product surface. These properties, among others, allow tissue paper to be used for example as cleaning wipes: windscreen cleaning wipe, kitchen paper, etc, sanitary products: e.g. toilet paper, handkerchiefs, household towels, towels, cosmetic wipes: facials and as serviettes or napkins just to mention some of the products that can be used. Tissue papers are often used to absorb liquids in hygienic areas.

In order to improve e. g. the absorption of tissue paper, more than one tissue paper ply is often combined to form a multi-ply product. The tissue plies are generally plybonded to produce for example a 2-ply or a 4-ply tissue paper. When more than one ply is used, it is advantageous to bond the plies together. When multi-ply tissue products are concerned, care must be taken that the individual plies are bonded to each other by adequate plybonding, although the plybonding should preferably not have a negative effect on the softness and absorbency.

There are a number of different ways to bond the plies together. Gluing, such as nested or in a foot-to foot mode, as well as spraying glue is well known in the state of the art. It has long been known to bond tissue paper with adhesive and different types of mechanical ply-bonding methods.

WO 96/32248 is one of the many patents describing the use of adhesives for ply bonding a multi-ply tissue paper. The multi-ply paper comprises a first ply of absorbent paper web having a first pattern of protrusions and a second ply having a second pattern of protrusions. The second ply is foot-to-foot laminated to the first ply. The adhesive is positioned between the first and second plies to selected protrusions, in a predetermined decorative pattern. However, the use of adhesive for ply bonding tends to make the tissue product stiff

Mechanical ply bonding is an alternative to adhesive ply bonding. High-pressure mechanical ply-bonding, knurling or edge embossing and perforation embossing are some different mechanical ply-bonding techniques. Producing ply bonding by mechanical embossing pressure is disclosed for example in GB-C-363699. The technique displayed in EP-A-0,672,402, which describes one way of mechanical ply-bonding a multi-ply tissue paper with a method that includes the steps of: providing at least two superposed plies of tissue paper; passing the superposed plies through a crimp roll arrangement including a rotating crimp element and a rotating anvil element and applying a pressure load against the rotating elements sufficient to crimp bond the plies. Embossing can be used for generating ply adhesion in multi-ply tissue papers.

However, the mechanical ply bonding achieves a fairly week bonding in the multi-ply tissue paper, whereby the laminate easily delaminates. Apart from that the ply-bonding produced thereby is not particularly strong, the necessary high embossing pressure may also result in embossing knobs (protrusions) in the finished product which are conspicuous and rough to touch.

This is why ply bonding by chemical methods, i.e. gluing has materialized. Making use of an adhesive in this respect also in combination with mechanical techniques (embossing methods) has found application in producing ply bonding. US 3,673,060 and US 5,173,351 teach, for example, that an adhesive is applied in the region of the embossing roll directly to the side of the paper web that will be later located on the inside of the multi-ply product.

Further, when two or more plies of a multi-ply product shall be attached to each other, a problem arises if these plies comprise lotions or other components, which were added *e.g.* to improve the softness of the multi-ply products, and which might inhibit or prevent the ply-attachment. Lotions often comprise compounds which will prevent a suitable ply-attachment.

Furthermore, treatment chemicals such as those used in the field of skin care and protection, healthcare, comprising lotions, may have and often have a rather strong influence on physical properties. Usually physical properties such as e.g. softness, bulk softness, dry and wet strength, structural strength, absorption of liquids are normally affected.

For care products that comprises lotions or other components added to improve the softness of the multi-ply products, ply bonding is an important problem since the addition of such components might inhibit or prevent the ply-attachment. Lotions often comprise compounds that will prevent a suitable ply-attachment. Normally, edge embossing does not create sufficient ply bond and the hydrogen bridge linkage that is the base for achieving ply bond by means of edge embossing is negatively influenced by the ingredients of the lotion, such as oil, wax etc. WO-A1-99/06634 describes a lotioned multiply paper where all four plies are embossed and mechanically bonded together before the lotion application. All plies are mechanically bonded before the lotion is applied and therefore the ply adhesion will suffer from all the disadvantages that mechanically bonded plies will suffer from, probably even more so due to the applied lotion. Lotion reduces the friction in-between the single plies and creates an increased risk of delamination of lotion coated, mechanically bonded products and the wiping action is also more easily destroying the ply bond.

When lotion is desired in a multi-ply tissue paper, ply bonding may thus be troublesome. In order to ensure that the lotion does not lower the ply adhesion, the embossed regions may be left untreated.

Traditionally, there has been a need of hot melt glue for bonding two plies of lotion coated hygiene paper together. It is known from US-4,867,831 to use melted thermoplastics to achieve plybonding in lotioned tissue papers. US 4,806,418 also describes plybonding of two pre-lotioned plies. The plybonding is in this document accomplished in that thermoplastic particles are distributed between the plies and then melting the thermoplastic particles to bond the plies, mechanical plybonding is considered not to work for lotioned tissue paper.

A multi-ply lotion treated tissue web whereby cold glue or hotmelt glue is used as adhesive is known from document US-A-2002/0146561.

Hot melt is expensive and also it is generally unsuitable for a tissue product to be subjected to heating since a tissue product would age in an accelerated process which would make the tissue paper brittle and stiff and the tensile strength may be lowered. Furthermore, the tissue paper could become more yellow when aged, especially if the paper comprises mechanical and chemo-mechanical pulp. Hot melt is often applied through spray nozzles.

Using spray technology for the application of cold glue would lead to a sufficient ply bond but would severely diminish the handfeel. For bonding embossed tissue using cold glue there is a need to apply a heavy load of cold glue to be able to secure the ply bond. Full face bonding with cold glue leads to a very stiff product. Further, there might be problems with the long term stability.

Therefore, there is a need to provide a multi-ply tissue paper and a method for manufacturing the same with an adhesive agent which is capable of providing a suitable ply attachment between two or more plies of a product without encountering the above-mentioned problems. Thus, especially between two or more plies of a multi-ply tissue paper product which comprises lotion or possibly other ingredients that can inhibit a conventional ply-attachment.

### Summary of the invention

A purpose of the invention is to reduce or remove any of the above-mentioned problems and negative effects involved with a lotion-coated multi-ply tissue paper product, wherein the ply-bonding of the multi-ply tissue paper webs is effectively achieved. Of course, other objects and advantages of the present invention will become apparent to those skilled in the art from the above-mentioned description as well as from the following description and practice of the invention.

This purpose is achieved by a method described in claim 1 and a multi-ply tissue paper as described in claim 10, respectively. This multi-ply tissue paper product and the method of manufacturing thereof is easy to handle and have a number of advantages, accept the avoidance or reduction of the above-mentioned problems and negative effects, comprising cost savings and the fact that it is possible to use existing equipment with only a few modifications.

A multi-ply tissue paper according to the invention comprises a laminate comprising at least two intermediary plies with a lotioned side or sides pointing outwardly; the lotion being applied onto at least one of the outer sides of at least one of the intermediary plies and the application thereof is prior to the lamination, preferably adhesive plybonding, of the intermediary plies; and at least one of the intermediary plies comprises at least two cold glue ply-bonded tissue paper webs, the sum of the surface areas of the bonds created between the tissue paper webs by the cold glue is between 2% and 50%, preferably between 5% and 30%, and most preferably between 8% and 20% of the total surface area of the tissue paper web.

The present invention relates also to a method for manufacturing a multi-ply tissue paper by laminating at least two intermediary plies of which at least one of the intermediary plies is a ply-bonded tissue paper web. A first intermediary ply comprising at least two tissue paper webs, which are ply-bonded by means of cold glue, the cold glue is applied with a structured glue application means having a pressure surface area between 2% and 50%, preferably between 5% and 30%, and most preferably between 8% and 20% and in particular about 15% of the total surface area of the tissue paper web. A second intermediary ply comprises at least one tissue paper web. Lotion is applied onto one side of at least one of the intermediary plies, after which the intermediary plies are laminated, preferably adhesively plybonded, with the lotioned side or sides pointing outwardly.

The term "pressure area" refers to all those areas of the tissue that have been treated with the cold glue. The cold glue could also be applied in an amount of for example 0,5 to 5 g per m² or preferably 1 to 2 g per m². The structured glue application means for applying the cold glue could for example be a structured glue application roller, a structured cliché, or any other means for applying the cold glue on only some areas of the surface of the tissue paper webs. The glue sites can be of any optional shape, such as small points, lines etc. It is also possible that at least one glue pattern may be provided by a coloured glue. In one embodiment of the invention the plybonding of at least two tissue paper webs by means of cold glue is preferably done by printing of the cold glue.

In this manner, the ply bonding process is performed in two steps with the step of lotion application in between. It is difficult to glue together several plies and it requires a good set up of the manufacturing line and a good glue mixture to achieve a ply bond. A good ply bond is with conventional technique difficult to achieve in-between all plies since the glue spreading through the product thickness is normally not even, which with conventional technique will result in that at least one ply is very weakly bonded and the product performance is then influenced in a negative way. If lotion is added in standard equipment for converting and applying glue according to a standard process, a glue bonded three or four ply lotion coated tissue paper product would be very hard to achieve. However, according to an embodiment of the invention where the process is split up in several parts, the cold glue is applied within a first step in-between two tissue paper webs, which renders a semi-finished product, ie the intermediary ply. The intermediary ply can then be used and combined with a tissue paper web or another intermediary ply as when two intermediary ply are combined and laminated.

In a further embodiment where the ply-bonding of the tissue paper webs with cold glue are applied in a cliché manner deliver a good compromise between softness and ply-bond. When the glue is applied in a pattern, stiffness is to some extent avoided since the untreated tissue still will be soft, the glue dots gives a sufficient ply bond over the product width without making it stiff. According to an embodiment two tissue paper webs are glued together in a first step and lotion is applied afterwards. By applying the lotion afterwards and only on one side of the intermediary ply or plies, the influence the lotion will have on the glue and on the ply bond will stay low and for the intermediary ply there can be two tissue paper webs in-between the lotion-coated side and the side where the next ply bonding step, ie the lamination, will take place. In the second ply bonding step, ie the lamination, there will be two non-coated sides of lotion of the intermediary plies available to bond to each other. Overall, a ply bond can be created that is more or less defined over the whole product thickness. According to an embodiment of the invention, the same amount of glue, performed by the cold glue ply-bonding process, between the first and the second and possibly also between the third and the forth tissue paper web of the multi-ply tissue paper product. In addition, since the cold glue ply-bonding is done before the lotion application, the influence of the lotion is decreased.

The two steps of ply bonding, herein defined as first ply-bonding and then lamination, will render the different ply bondings independent to each other and thereby a defined and even glue distribution over the product thickness is achieved even in a three, four or more ply product, which would not be possible according to conventional technique where there is one gluing step with the plies. To optimize the product performance different patterns for the ply-bonding of the tissue paper webs can be used and also for the final lamination of the intermediary plies. With that the possibility of relative movements that can take place both in lateral and transverse direction relative to the plane of the multi-ply tissue paper is defined, which of course contributes to the drapability of the laminated material. In that way, the drapability can be controlled and the shear resistance of the finished product during wiping action can be optimized with an acceptable softness and drapability.

The different ply-bondings are also stronger than it would have been if it would have been ply-bonded in a conventional way by applying glue in one step into the four plies and marrying them all together due to the fact of the even glue distribution and the two step method. There is much less interference between the cold glue plybonding and the later applied lotion since the ply bonding of the outer plies takes place in the cold glue ply-bonding step that is placed before the lotion application. For the lamination of the two intermediary plies there are already two tissue paper webs in-between the applied lotion and the surface area where the glue for the lamination of the intermediary plies is applied so that the influence of the lotion is minimized. It is thus accordingly possible to achieve a satisfactory ply-bonding by using cold glue only on some areas of the surface of the tissue paper webs. There are several advantages with respect to softness, drapability, absorption etc, when the cold glue is applied only on some areas. Further, in the lamination step of the intermediary plies, the lotion is pointing outwardly, which enhances the ply-bonding as well as the lotion is also directed to the user side.

In many other ply-bonding processes, the structure of the tissue paper web or ply may be deformed in connection with the ply bonding or the lamination. However, according to an embodiment of the method of the invention, the multi-ply tissue paper substantially maintains its strength properties better throughout the process since the pressure that has to be applied to get a satisfactorily ply bond during the two ply bonding steps is much lower than the pressure one has to apply by marrying three, four or more plies together in one lamination step. According to an embodiment of the invention, an improved multi-ply tissue paper and method for manufacturing the same is provided in an easy and reliable manner while simultaneously increasing the softness, drapability, absorption, strength as compared to conventional techniques and products. The difficulties encountered according to conventional technique with plybonding a lotioned multi-ply tissue paper is according to the invention reduced and solved.

Also, different structures and/or patterns may be effected by the different ply-bonding steps and possibly by any embossing step. Any embossing method is possible to use, comprising micro and macro embossing, volume embossing, decorative or design embossing etc. An intermediary ply, or a tissue paper web, is micro embossed, by approximately 30-50 dots/cm² or preferably by approximately 40 dots/cm², and that the second intermediary ply, or a tissue paper web, is volume embossed and that the lamination of the prebonded and embossed intermediary plies is performed by a design embossing plybonding unit. If the embossing is performed on the intermediary plies, then a top and backside embossing of the outer sides of the laminated multi-ply tissue paper is preferred.

These different structures and/or patterns within the tissue paper webs as well as within the intermediary ply-bonded tissue paper webs forming the plies as well as within the final product of a multi-ply tissue paper is also possible due to the elaborated product and means for manufacturing the same. In this manner, the multi-ply tissue paper may be varied in a great number of ways and the different possible structures and/or patterns may easily be altered in order to achieve a large number of different products. Different small and/or large structures and/or patterns in the different tissue paper webs, intermediary ply-bonded tissue paper webs or in the final multi-ply tissue paper may be combined in various manners. Two-sidedness may, if one so wishes, be achieved. Different aesthetically pleasing structures and/or patterns are possible etc.

The application of the lotion performed before the lamination mainly influences the lamination of the intermediary plies and even so, only to a minor degree since the lotioned side or sides are pointing outwardly.

In accordance with one embodiment of the invention the method comprises laminating at least two intermediary plies where a first and a second intermediary ply, each comprising at least two tissue paper webs, which are ply-bonded by means of cold glue. The cold glue is applied with a structured glue application means having a pressure area between 2% and 50%, preferably between 5% and 30%, and most preferably between 8% and 20%. Lotion is applied onto one side of at least one of the intermediary plies, after which the intermediary plies are laminated or adhesively plybonded with the lotioned side or sides pointing outwardly. According to another embodiment of the invention at least one of the intermediary plies comprises three tissue paper webs. The multi-ply tissue paper is then a laminate made of at least two intermediary plies of cold glue ply-bonded tissue paper webs comprising at least one lotioned side or sides pointing outwardly.

There are many advantages using cold glue instead of conventionally used hot melt glue. However, in the state of art technology, there have been severe problems regarding this as earlier mentioned, eg the handfeel and the stiffness, when cold glue have been used. According to the claimed invention it has been possible to overcome these difficulties by introducing the before-mentioned possibilities of cold glue pattern variation and therefore optimization of the product features. The cold glue could be any glue that can be applied in a cold state. A preferred embodiment comprises that the glue according to the invention is a PVA, ie a polyvinylalcohol, based cold glue. Any glue that could be applied in a cold state would also be suitable. Examples of different glues would for instance be carboxy methyl cellulose/CMC, polyvinyl acetate, ethylene vinyl acetate, ethylene acrylic acid, vinyl acetate acrylic acid, styrene acrylic acid, polyurethane, polyvinylidene chloride, starch, chemically modified starch, dextrin, water soluble polymers such as latexes and milky colloids in which natural or synthetic rubber is suspended in water.

The strong ply bonding created by means of the cold glue in the first ply-bonding step may easily be embossed after the first ply-bonding step and thereby create a more soft material. According to a preferred embodiment of the invention the ply-bonded tissue paper web, ie the intermediary ply, is embossed gently first before the lotion is applied and before the lamination of the intermediary plies at the second plybonding step. The method according to the invention is lenient to such a structure and the structure can be substantially maintained throughout the ply-bonding step. However, according to another mode of the invention the tissue paper web or webs or the intermediary ply or plies can be pre-embossed or embossed at any stage in the manufacturing process. The tissue may also remain unembossed. According to an embodiment of the invention at least one of the intermediary plies is embossed after the application of the lotion and before the lamination of the intermediary plies.

According to another embodiment of the invention, the lamination of the intermediary plies in the second plybonding step for the lotioned, ply-bonded tissue paper web is performed by using goffrage décor technology for bonding of the intermediary plies of the ply-bonded tissue paper. Preferably at least one of the intermediary plies or the tissue paper webs is pre-embossed. The laminate of the at least two plies of the at least two cold glue ply-bonded tissue paper may have a pre-embossing that can be combined with the design pattern coming out of the goffrage décor bonding of the pre-embossed plies together.

Further, according to an embodiment of the invention, on one side of the recombined tissue, the embossing protrusions will extend outwards. This might slightly impair the aesthetic appearance and the haptics of the product. To avoid this, another ply, either unembossed or embossed, can be joined to the laminate. In case an embossed ply is used, the embossing protrusions thereof ought to be directed inwards. But it is important to know that any combination of differently embossed tissue papers or plies may be used in accordance with the invention.

It is to be understood that the invention is not limited in its application to the details of construction and the arrangements of components set forth in the following description.

### Detailed description of embodiments of the invention

In the following, the term soft paper, tissue paper does not only refer to the raw material as obtained from the paper machine, but also covers the corresponding further processed products, since there often is no strict borderline to distinguish the same.

A tissue paper web is defined as a soft absorbent paper having a basis weight below 65 g/m² and typically between 10 and 50 g/m². Its density is typically below 0.6 g/cm³, preferably below 0.30 g/cm³ and more preferably between 0.08 and 0.20 g/cm³. Moist tissue paper webs are usually dried by methods called Yankee drying, through air drying or impulse drying. The fibres contained in the tissue paper are mainly pulp fibres from chemical pulp, mechanical pulp, thermo mechanical pulp, chemo-mechanical pulp and/or chemo-thermo mechanical pulp. The fibres may also be recycled fibres. The tissue paper may also contain other types of fibres enhancing, for instance, strength, absorption or softness of the paper. The tissue paper web may be homogeneous or layered, wet-pressed or blow-dried, TAD-dried. The tissue paper includes, but is not limited to, felt-pressed tissue paper, pattern-densified tissue paper, uncompacted tissue paper or compacted tissue paper.

Cellulose pulp fibers that can be used in accordance with the invention may be of any kind available. Some of the conventional available chemical pulps may be sulphite, sulphate or organosolve pulp. Mechanical cellulose pulp can be grinded, refined, thermo-mechanical, high thermo-mechanical, chemi-mechanical and so on. The pulp may be of any kind: coniferous, deciduous or any other alternative source of cellulose fibers or the like. Another important pulp source is recycled fibers, both from internal rejects and brokes as well as from external recycled fibers.

Normally when multi-ply tissue paper products, such as handkerchiefs, toilet paper, towels or kitchen towels, are produced, one intermediate step preferably occurs with so-called doubling in which the tissue paper web in the finished product's desired number of plies is usually gathered on a common multiply master roll. The processing step fro the tissue paper that has already been optionally wound up in several plies to the finished tissue product occurs in processing machines which comprises operations such as repeated smoothing of the tissue, embossing, to an extent combined with application of adhesive to produce ply adhesion of the individual tissue paper plies to be combined together, as well as longitudinal cut, folding, cross cut, placement and bringing together a plurality of individual tissues and their packaging as well as bringing them together to form larger surrounding packaging or bundles. The individual tissue paper webs can also be pre-embossed and then combined in a roll gap according to the foot-to-foot or nested methods.

According to an embodiment of the invention, the final product, ie the multi-ply tissue paper, comprises several plies of tissue paper webs. The tissue paper web may in turn be built up in a number of different ways, it may be homogeneous, heterogeneous, layered etc etc. The manner in which the tissue paper web may be built up with can be any manner known to the skilled man in the art. The manufacture of the multi-ply tissue paper is made by laminating at least two intermediary plies. The intermediary plies are made up of single-ply tissue paper webs. At least one of the intermediary plies is formed by ply-bonded tissue paper webs.
- Firstly, the tissue paper webs are transferred to a first plybonding step where the so called intermediary plies can be formed. The first plybonding step comprises plybonding by means of cold glue, whereby the cold glue is applied with a structured glue application means having a pressure area between 2% and 50%, preferably between 5% and 30%, and most preferably between 8% and 20%. At least one of the intermediary plies is a ply-bonded tissue paper web formed in the first plybonding step by two, three or more of these (single-ply) tissue paper webs. There could also be two so called first ply-bonding steps, each (A,B) comprising the steps of ply-bonding at least two tissue paper webs (1,2; 3,4) creating two intermediary plies of ply-bonded tissue paper webs. However, an intermediary ply could also comprise a single-ply tissue paper web. The intermediary plies could thus comprise ply-bonded tissue paper webs as well as a single-ply tissue paper web.
- Secondly, at least one side of at least one of the intermediate plies will according to the invention be treated with lotions to enhance softness and to impregnate the tissue paper with skin treating agents. Lotion is applied onto one side of at least one of the intermediary plies.
- Finally, at least two intermediary plies, one of which at least one of the intermediary plies is a ply-bonded tissue paper web will then be laminated in a second plybonding step. The intermediary plies are thus laminated, preferably adhesively ply-bonded, in the second plybonding step and thereby the final product comprising a multi-ply tissue paper is manufactured.

Thus according to the invention, the ply-bonding process is performed in two separate ply-bonding steps with the step of lotion application in between these two ply-bonding steps. After the first ply-bonding step, at least one intermediary ply has been created. Lotion is then applied onto one side of at least one of the intermediary plies. At least one of the intermediary plies is a cold glue ply-bonded tissue paper web. However, according to an embodiment of the invention one, or several, single-ply tissue paper webs may also be used as an intermediary ply. According to a further embodiment of the invention, the tissue paper web or the ply-bonded tissue paper web is pre-embossed or embossed at any stage in the method. One preferred embodiment is that at least one of, or several of the intermediary plies is embossed after the lotion application and before the second ply-bonding step. In another preferred embodiment of the invention at least one of the intermediary plies is pre-embossed.

In one embodiment of the invention, for example, small structures and/or patterns may be used in one of the intermediary plies, which in turn may be made out of for example two ply-bonding tissue paper webs that may have another, the same or a different structure and/or pattern. Further, the other ply, which may be an intermediary single ply of tissue paper web, or an intermediary ply-bonded tissue paper web, may have the same or a different structure and/or pattern as the first intermediary ply. The two intermediary plies may thus already be made up of and have a great range of different possibilities regarding only structures and/or patterns due to the first ply-bonding step and possibly any embossing step at any stage. Finally, the multi-ply tissue paper, made up of at least two intermediary plies, may also have another structure and/or pattern implied in the lamination in the second ply-bonding step.

According to one embodiment of the invention tissue paper, creped or uncreped obtained by wet rush transfer, can be lotioned, the use of creped tissue paper being preferred. The multi-ply tissue paper, can typically have 3, 4, 5 or even 6 plies.

Tissue products using the lotion-coated multi-ply tissue paper of the invention are preferably sanitary products (e.g. toilet paper), handkerchiefs, tissues for facial use, cosmetic wipes, serviettes/napkins and towels in which the application of cosmetic treatment compositions and/or treatment compositions that convey softness (lotions) plays a part. The use in handkerchiefs and toilet paper is preferred. The definition of lotion comprises all types of lotions, emollients and softener that may be applied to the rather dry tissue paper. Some of these lotions have fatty ingredients.

According to the invention the tissue paper to be treated with the lotion preferably has a basis weight of 10 to 40, more preferably 12 to 20 g/m² per ply, in particular 13 to 17 g/m² and a total basis weight (including all plies without lotion) of usually 10 to 80 g/m².

According to an embodiment of the invention the lotion application of the intermediary ply or plies takes place after the tissue paper web has been dried and after the first plybonding step of the tissue paper webs that has been done by means of cold glue. The lotion is applied onto at least one side of at least one of the intermediary ply-bonded tissue paper webs, before laminating the intermediary plies into the final product of a multi-ply tissue paper. It is according to an embodiment of the invention preferred to first ply-bond at least two single-ply tissue paper webs into a ply-bonded tissue paper web, and then to apply the lotion. In a preferred production process for a lotioned 4-ply tissue paper (product), two intermediary plies each comprising a 2-ply-bonded tissue paper web are each lotioned on one side, followed by laminating and thereby joining together the untreated sides of the intermediary plies and thereby obtaining a 4-ply tissue paper product.

It is according to an embodiment of the invention preferred for the lotion composition to be applied to at least one, preferably both outer plies of the multi-ply tissue paper. The structure of the individual plies, tissue paper webs or the multi-ply tissue paper may be patterned either before or after application of the lotion composition.

Preferred, exemplary embodiments of the process according to the invention will be explained with reference to the Figures, wherein like elements are shown with the same reference signs.

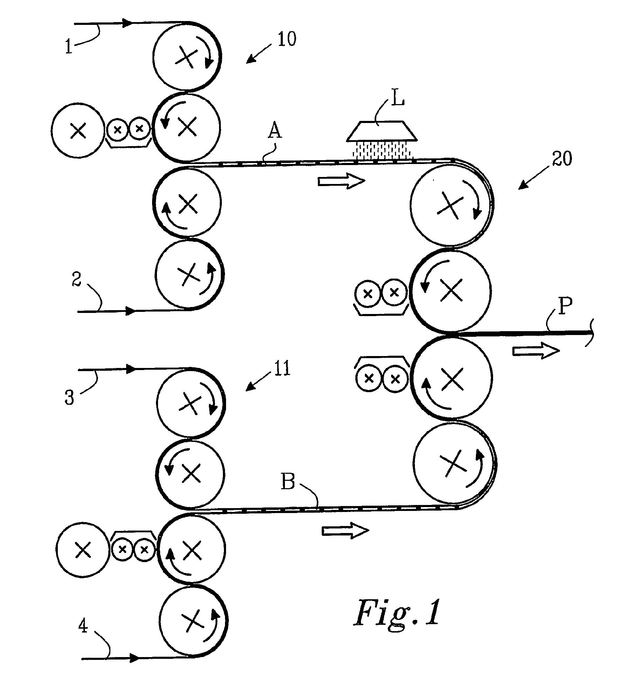

Fig. 1 shows an embodiment of an apparatus for carrying out the method according to the invention. Two tissue paper webs 1, 2 are combined and fed to the first plybonding step 10 by means of which they are plybonded by means of cold glue. The two tissue paper webs 1, 2 form a ply-bonded tissue paper web and constitutes an intermediary ply A. The intermediary ply A will subsequently be laminated, preferably adhesively plybonded, in a second plybonding step, which in a preferred embodiment is a design and a marrying roll 20. Meanwhile, two other tissue paper webs 3, 4 are fed to another first plybonding step 11 and are also plybonded by means of cold glue and will thereby form an intermediary ply B out of the cold glue ply-bonded tissue paper webs 3 and 4. Afterwards, this second intermediary ply B is also fed to the design and marrying roll 20. The resultant 4-ply sheet, P, ie the multi-ply tissue paper, comprises thus the intermediary plies A and B, and the intermediary ply A comprises in turn the cold glue ply-bonded tissue paper webs 1 and 2, similarly ply B comprises the two cold glue plybonded tissue paper webs 3 and 4. The application of the lotion L is situated between the first 10, 11 and the second plybonding step 20, respectively.

The multi-ply tissue paper can be a laminate of at least two intermediary plies, A and B. However, the multi-ply tissue paper according to the invention can also be a laminate of more than two intermediary plies, namely three intermediary plies, or possibly more. Also, at least one of the intermediary plies is according to the invention a ply-bonded tissue paper web. The at least one ply-bonded tissue paper web could comprise a 3-plybonded tissue paper web as well as a 2-ply-bonded tissue paper web. It is also possible that one, or several, of the intermediary plies comprises a single-ply tissue paper web.

Accordingly, there are a number of possible alternatives, where only a few are mentioned here, nevertheless being clearly a part of the invention. The multi-ply tissue paper could thus be a 4-ply tissue product comprising two intermediary plies each comprising a 2-ply-bonded tissue paper web, or it could also be a 4-ply tissue product comprising one intermediary ply comprising a 3-ply-bonded tissue paper web laminated with one intermediary single-ply tissue paper web. Further, a 5-ply tissue product could comprise one intermediary ply of a 2-ply-bonded tissue paper web laminated with one intermediary ply of a 3-ply-bonded tissue paper web. A 6-ply tissue product could comprise two intermediary plies of a 3-ply-bonded tissue paper web or three intermediary plies of a 2-ply-bonded tissue paper web etc etc. Also, the multi-ply tissue paper may comprise a 3-ply tissue product comprising two intermediary plies, one comprising a 2-ply-bonded tissue paper web and the other a single ply tissue paper product. Several combinations are thus possible and are also all embodiments of the invention.

The application of the lotion L is situated after the first plybonding step forming at least one intermediary ply of a ply-bonded tissue paper web, preferably a 2-ply-bonded or a 3-ply-bonded tissue paper web. The application of the lotion L is also situated before the second ply-bonding step, whereby the at least two intermediary plies are laminated into a final multi-ply tissue paper, preferably a 3-ply, 4-ply, 5-ply or a 6-ply product.

Suitable application techniques for the lotion include spraying, rotogravure printing or flexographic printing or application by means of rolls having a smooth surface. Preferably, the lotion is applied in an amount of 3 to 10 g per m² treated surface, i.e. preferably with the double amount if both surfaces are lotioned. The ratio of lotion composition in the tissue (single or multi-ply) is preferably 10 to 40 % by weight, more preferably 21 to 35 %, in particular 25 to 30 % by weight.

The treatment chemical(s) can be of any kind available. It may, only to mention some examples, be selected from the following compound classes or compounds. Agents for skin care and protection, so-called cosmetic lotions such as moisturizers, such as substitutes for the skin's natural moisturizing factor (NMF) that contain e.g. cleavage products of collagen, glycerol etc. Skin care agents, e.g. long-chain fatty acid esters (like sorbitan fatty acid ester or Cetiol®), lanolin or derivatives thereof Fragrances, e.g. natural, naturally identical or artificial perfumes. Active cosmetic ingredients like D-panthenol or the active camomile ingredient α-bisabolol or agents exhibiting other functions, e.g. strength-enhancing agents, particularly wet-strength agents like epichlorohydrin resins or crosslinked polyalkylene amines. Agents that promote the softness (e.g. bulk softness or surface softness) of the planar product, particularly the tissue paper. For example a polyhydroxy compound (e.g. ethylene glycol, propylene glycol, a liquid polyethylene glycol (derivative), a liquid polypropylene glycol (derivative) and/or glycerol), also quaternary ammonium compounds as described e.g. in US 5,312,522 or 5,397,435 and the prior art cited therein, optionally in combination with the polyhydroxy compounds described in both these documents; or a poly(siloxane), particularly the (poly)siloxanes described in EP-A-347 153 and EP-A-347 154. Surfactants used e.g. as absorption rate control agents, e.g. long-chain quaternary ammonium compounds that may also exhibit softness-promoting action waxes, oils, and/or inorganic or organic pigments or dyes may be applied as well..
The total amount of nonvolatile treatment chemical(s) applied in the treated surface area of the planar product, particularly tissue, is preferably 0.01 to 50 wt.%, with greater preference on 0.5 - 45 wt.% and even greater preference on 0.75 - 40 wt.%, relative to the weight of the untreated oven-dried planar product, particularly tissue. Oven-dried being understood in accordance with German standard DIN EN 20638 and ISO 638. Even greater preference is given to values of 1-35 wt.%, particularly 2-30 wt.%. What is considered to be volatile is any component that volatilizes upon further processing of the planar product, especially tissue, e.g. solvent such as water, unless it is intended to remain in the composition, e.g. a cosmetic lotion.

Upon application of the treatment composition, it is possible to start out from any of the above-mentioned intermediary plies. In one preferred embodiment the application of the lotion is started from an intermediary ply, usually a 2-ply-bonded to a 4-ply-bonded tissue paper web produced in the first ply-bonding step. One or a plurality of single-ply tissue webs can alternatively be treated and then transferred into a multiply tissue paper product via the method of invention where the intermediary plies are laminated in a second plybonding step. The inner plies can remain untreated, or can be treated with a strength-enhancing agent, whereas the two outer plies were treated with a treatment chemical to improve surface softness. In principle, an extremely wide variety of combinations of differently treated tissue plies is conceivable.

## Claims

1. Method for manufacturing a multi-ply tissue paper by laminating at least two intermediary plies of which at least one of the intermediary plies is a ply-bonded tissue paper web whereby a first intermediary ply (A) comprising at least two tissue paper webs (1, 2), which are ply-bonded by means of cold glue, the cold glue is applied with a structured glue application means having a pressure surface area between 2% and 50%, preferably between 5% and 30%, and most preferably between 8% and 20% of the total surface area of the tissue paper web; and a second intermediary ply (B) comprising at least one tissue paper web (3; 3, 4); lotion (L) is applied onto one side of at least one of the intermediary plies; after which the intermediary plies (A, B) are laminated, preferably adhesively plybonded, with the lotioned side or sides pointing outwardly.

2. A method according to claim 1, **characterized by** a first and a second intermediary ply (A, B), each comprising at least two tissue paper webs (1,2; 3,4), which are ply-bonded by means of cold glue, the cold glue is applied with a structured glue application means having a pressure area between 2% and 50%, preferably between 5% and 30%, and most preferably between 8% and 20%; lotion (L) is applied onto one side of at least one of the intermediary plies; after which the intermediary plies (A, B) are laminated, preferably adhesively plybonded, with the lotioned side or sides pointing outwardly.

3. A method according to any one of the preceding claims, **characterized in that** at least one of the intermediary plies (A,B) comprises three tissue paper webs.

4. A method according to any one of the preceding claims, **characterized in that** the plybonding of the at least two tissue paper webs (1, 2; 3, 4) by means of cold glue is done by printing of the cold glue.

5. A method according to any one of the preceding claims, **characterized in that** the cold glue is a PVA, polyvinylalcohol, based cold glue.

6. A method according to any one of the preceding claims, **characterized in that** at least one of the intermediary plies is embossed after the application of the lotion and before the lamination of the intermediary plies.

7. A method according to any one of the preceding claims, **characterized in that** the tissue paper web or webs or the intermediary ply or plies can be pre-embossed or embossed at any stage in the manufacturing process.

8. A method according to any one of the preceding claims, **characterized in that** the lamination of the intermediary plies is performed by using goffrage decor technology for bonding of the intermediary plies, preferably at least one of the intermediary plies or the tissue paper webs is pre-embossed.

9. A method according to any one of the preceding claims, **characterized in that** the first intermediary ply (A) is micro embossed, preferably by approximately 40 dots/cm², and that the second intermediary ply is volume embossed and that the lamination of the prebonded and embossed intermediary plies is a design embossing plybonding.

10. A multi-ply tissue paper, comprising a laminate comprising at least two intermediary plies (A, B) with a lotioned side or sides pointing outwardly; the lotion being applied onto at least one of the outer sides of at least one of the intermediary plies; at least one of the intermediary plies comprises at least two cold glue ply-bonded tissue paper webs (1, 2), the sum of the surface areas of the bonds created between the tissue paper webs (1, 2) by the cold glue is between 2% and 50%, preferably between 5% and 30%, and most preferably between 8% and 20% of the total surface area of the tissue paper web.

11. A multi-ply tissue paper according to claim 10, **characterized by** that the application of lotion onto at least one of the outer sides of at least one of the intermediary plies is made prior to the lamination, preferably adhesive plybonding, of the intermediary plies (A, B).

12. A multi-ply tissue paper according to any one of the claims 10-11, **characterized by** a first and a second intermediary ply (A, B), each comprising at least two cold glue ply-bonded tissue paper webs (1, 2; 3, 4), the sum of the areas of the bonds created between the tissue paper webs (1, 2; 3, 4) by the cold glue is between 2% and 50%, preferably between 5% and 30%, and most preferably between 8% and 20%.

13. A multi-ply tissue paper according to any one of the claims 10-12, **characterized in that** at least one of the intermediary plies (A,B) comprises three tissue paper webs.

14. A multi-ply tissue paper according to any one of the claims 10-13, **characterized in that** at least one of the intermediary plies is pre-embossed.

15. A multi-ply tissue paper according to any one of the claims 10-14, **characterized in that** the laminate of the at least two intermediary plies has a goffrage décor bonding the intermediary plies together.

16. A multi-ply tissue paper according to any one of the claims 10-15, **characterized in that** the first intermediary ply (A) is micro embossed, preferably by approximately 40 dots/cm2, and that the second intermediary ply is volume embossed and that the lamination of the prebonded and embossed intermediary plies is a design embossing plybonding.

## Patentansprüche

1. Verfahren zum Herstellen eines mehrlagigen Tissuepapiers durch Laminieren von zumindest zwei Zwischenlagen, von denen zumindest eine der Zwischenlagen eine lagenverbundene Tissuepapierbahn ist, wobei eine erste Zwischenlage (A) zumindest zwei Tissuepapierbahnen (1, 2) aufweist, die durch Kaltleim lagenverbunden sind, wobei der Kaltleim mit einem strukturierten Leimauftragungsmittel mit einer Druckoberflächenfläche zwischen 2% und 50%, bevorzugt zwischen 5% und 30% und am meisten bevorzugt zwischen 8% und 20% der gesamten Oberflächenfläche der Tissuepapierbahn aufgetragen wird; und eine zweite Zwischenlage (B) zumindest eine Tissuepapierbahn (3; 3, 4) aufweist; wobei eine Lotion (L) auf eine Seite zumindest einer der Zwischenlagen aufgetragen wird; wonach die Zwischenlagen (A, B) laminiert, bevorzugt klebend mit der mit Lotion versehenen Seite oder den Seiten nach außen weisend lagenverbunden werden.

2. Verfahren nach Anspruch 1, **gekennzeichnet durch** eine erste und eine zweite Zwischenlage (A, B), die jeweils zumindest zwei Tissuepapierbahnen (1, 2; 3, 4) aufweisen, die durch Kaltleim lagenverbunden sind, wobei der Kaltleim mit einem strukturierten Leimauftragungsmittel mit einer Druckfläche zwischen 2% und 50%, bevorzugt zwischen 5% und 30% und am meisten bevorzugt zwischen 8% und 20% aufgetragen wird; wobei eine Lotion (L) auf eine Seite zumindest einer der Zwischenlagen aufgetragen wird; wonach die Zwischenlagen (A, B) laminiert, bevorzugt klebend mit der mit Lotion versehenen Seite oder den Seiten nach außen weisend lagenverbunden werden.

3. Verfahren nach einem der vorgehenden Ansprüche, **dadurch gekennzeichnet, dass** zumindest eine der Zwischenlagen (A, B) drei Tissuepapierbahnen aufweist.

4. Verfahren nach einem der vorgehenden Ansprüche, **dadurch gekennzeichnet, dass** das Lagenverbinden der zumindest zwei Tissuepapierbahnen (1, 2; 3, 4) mittels Kaltleim durch Drucken des Kaltleims durchgeführt wird.

5. Verfahren nach einem der vorgehenden Ansprüche, **dadurch gekennzeichnet, dass** der Kaltleim ein PVA, Polyvinylalkohol, basierter Kaltleim ist.

6. Verfahren nach einem der vorgehenden Ansprüche, **dadurch gekennzeichnet, dass** zumindest eine der Zwischenlagen nach dem Auftragen der Lotion und vor dem Laminieren der Zwischenlagen geprägt wird.

7. Verfahren nach einem der vorgehenden Ansprüche, **dadurch gekennzeichnet, dass** die Tissuepapierbahn oder die Bahnen oder die Zwischenlage oder die Lagen in irgendeinem Stadium in dem Herstellungsprozess vorgeprägt oder geprägt werden können.

8. Verfahren nach einem der vorgehenden Ansprüche, **dadurch gekennzeichnet, dass** das Laminieren der Zwischenlagen durch Verwenden von Goffrage-Dekor-Technologie zum Verbinden der Zwischenlagen durchgeführt wird, wobei bevorzugt zumindest eine der Zwischenlagen oder der Tissuepapierbahnen vorgeprägt ist.

9. Verfahren nach einem der vorgehenden Ansprüche, **dadurch gekennzeichnet, dass** die erste Zwischenlage (A) mikrogeprägt ist, bevorzugt durch etwa 40 Punkte/cm², und dass die zweite Zwischenlage volumengeprägt ist und dass die Laminierung der vorverbundenen und geprägten Zwischenlagen ein Design prägendes Lagenverbinden ist.

10. Mehrlagiges Tissuepapier, umfassend ein Laminat, umfassend zumindest zwei Zwischenlagen (A, B) mit einer mit Lotion versehenen Seite oder Seiten, die nach außen weist oder weisen; wobei die Lotion auf zumindest eine der äußeren Seiten zumindest einer der Zwischenlagen aufgetragen ist; wobei zumindest eine der Zwischenlagen zumindest zwei Kaltleim-lagenverbundene Tissuepapierbahnen (1, 2) umfasst, wobei die Summe der Oberflächenflächen der Verbindungen, die zwischen den Tissuepapierbahnen (1, 2) durch den Kaltleim erzeugt sind, zwischen 2% und 50%, bevorzugt zwischen 5% und 30% und am meisten bevorzugt zwischen 8% und 20% der gesamten Oberflächenfläche der Tissuepapierbahn ist.

11. Mehrlagiges Tissuepapier nach Anspruch 10, **dadurch gekennzeichnet, dass** das Auftragen von Lotion auf zumindest eine der äußeren Seiten zumindest einer der Zwischenlagen vor dem Laminieren, bevorzugt dem klebenden Lagenverbinden der Zwischenlagen (A, B) durchgeführt wird.

12. Mehrlagiges Tissuepapier nach einem der Ansprüche 10-11, **gekennzeichnet durch** eine erste und eine zweite Zwischenlage (A, B), die jeweils zumindest zwei Kaltleim-lagenverbundene Tissuepapierbahnen (1, 2; 3, 4) aufweisen, wobei die Summe der Flächen der Verbindungen, die zwischen den Tissuepapierbahnen (1, 2; 3, 4) **durch** den Kaltleim erzeugt werden, zwischen 2% und 50%, bevorzugt zwischen 5% und 30% und am meisten bevorzugt zwischen 8% und 20% ist.

13. Mehrlagiges Tissuepapier nach einem der Ansprüche 10-12, **dadurch gekennzeichnet, dass** zumindest eine der Zwischenlagen (A, B) drei Tissuepapierbahnen umfasst.

14. Mehrlagiges Tissuepapier nach einem der Ansprüche 10-13, **dadurch gekennzeichnet, dass** zumindest eine der Zwischenlagen vorgeprägt ist.

15. Mehrlagiges Tissuepapier nach einem der Ansprüche 10-14, **dadurch gekennzeichnet, dass** das Laminat der zumindest zwei Zwischenlagen ein Goffragedekor aufweist, das die Zwischenlagen zusammenbindet.

16. Mehrlagiges Tissuepapier nach einem der Ansprüche 10-15, **dadurch gekennzeichnet, dass** die erste Zwischenlage (A) mikrogeprägt ist, bevorzugt durch etwa 40 Punkte/cm², und dass die zweite Zwischenlage volumengeprägt ist und dass die Laminierung der vorverbundenen und geprägten Zwischenlagen ein Design prägendes Lagenverbinden ist.

## Revendications

1. Procédé de fabrication d'un papier absorbant multicouche par stratification d'au moins deux couches intermédiaires dont au moins une est une bande de papier absorbant à couches collées, une première couche intermédiaire (A) comprenant au moins deux bandes de papier absorbant(1,2) qui sont collées entre elles au moyen de colle à froid, la colle à froid étant appliquée à l'aide d'un moyen d'application de colle structuré, doté d'une surface de pression comprise entre 2 % et 50 %, de préférence entre 5 % et 30 % et le plus préférablement entre 8 % et 20 % de la surface totale de la bande de papier absorbant ; et une deuxième couche intermédiaire (B) comprenant au moins une bande de papier absorbant (3 ; 3, 4) un liquide de traitement (L) étant appliqué sur une face d'au moins une des couches intermédiaires après quoi les couches intermédiaires (A. B) sont stratifiées, de préférence collées entre elles, la face ou les faces ayant reçu le liquide de traitement étant orientée(s) vers l'extérieur.

2. Procédé selon la revendication 1, **caractérisé en ce qu'**une première et une deuxième couches intermédiaires (A, B) comprenant chacune au moins deux bandes de papier absorbant (1, 2 ; 3, 4) qui sont collées entre elles au moyen de colle à froid, la colle à froid étant appliquée à l'aide d'un moyen d'application de colle structuré, doté d'une surface de pression comprise entre 2 % et 50%, de préférence, entre 5% et 30% et le plus préférablement entre 8 % et 20 % du liquide de traitement (L) étant appliqué sur une seule face d'au moins une des couches intermédiaires : après quoi les couches intermédiaires (A, B) sont stratifiées, de préférence collées entre elles, la face ou les faces ayant reçu du liquide de traitement étant orientée(s) vers l'extérieur.

3. Procédé selon l'une quelconque des revendications qui précèdent, **caractérisé en que** qu'au moins une des couches intermédiaires (A, B) comprend trois bandes de papier absorbant

4. Procédé selon l'une quelconque des revendications qui précèdent, **caractérisé en ce que** le collage des couches des au moins deux bandes de papier absorbant (1, 2; 3, 4) au moyen de colle à froid est réalisé par impression de la colle à froid.

5. Procédé selon l'une quelconque des revendications qui précèdent, **caractérisé en ce que** la colle à froid est une colle à froid a base de PVA alcool polyvinylique.

6. Procédé selon l'une quelconque des revendications qui précèdent, **caractérisé en ce qu'**au moins une des couches intermédiaires est gaufrée après l'application du liquide de traitement et avant la stratification des couches intermédiaires.

7. Procédé selon l'une quelconque des revendications qui précèdent, **caractérisé en ce que** la bande de papier absorbant, ou les bandes de papier absorbant ou la couche intermédiaire, ou les couches intermédiaires peut/peuvent être pré-gaufrée(s), ou gaufrée(s) à n'importe quel stade du processus de fabrication.

8. Procédé selon l'une quelconque des revendications qui précèdent, **caractérisé en ce que** à stratification des couches intermédiaires est effectuée en utilisant une technologie de décor gaufré pour relier les couches intermédiaires, de préférence au moins une des couches intermédiaires, ou une des bandes de papier absorbant étant pré-gaufrée.

9. Procédé selon l'une quelconque des revendications qui précèdent, **caractérisé en ce que** la première couche intermédiaire (A) est micro-gaufrée, de préférence en approximativement 40 points/cm², et que la deuxième couche intermédiaire est gaufrée en volume et que la stratification des couches intermédiaires pré-collées et pré-gaufrées est une liaison de couches par un gaufrage comportant un décor.

10. Papier absorbant multicouche comportant un stratifié comprenant au moins deux couches intermédiaires (A, B) dont une face, ou des faces ayant reçu du liquide de traitement est orientée ou orientées vers l'extérieur ; le liquide de traitement étant appliqué sur au moins une des faces extérieures d'au moins une des couches intermédiaires au moins une des couches intermédiaires comprenant au moins deux bandes (1, 2) de papier absorbant collées entre elles avec une colle à froid, la somme des surfaces des collages créées entre les bandes de papier absorbant (1, 2) par la colle à froid étant comprise entre 2 % et 50 %, de préférence entre 5 % est 30 % et le plus préferablement entre 8% et 20% de la surface totale de la bande de papier absorbant.

11. Papier absorbant multicouche selon là revendication 10, **caractérisé en ce que** l'application du liquide de traitement sur au moins une des faces extérieures d'au moins une des couches intermédiaires est effectuée avant la stratification, de préférence un collage de couches par adhésif, des couches intermédiaires (A, B).

12. Papier absorbant multicouche selon l'une quelconque des revendications 10 à 11, **caractérisé en ce qu'**une première et une deuxième couches intermédiaires (A, B), comprenant chacune au moins deux bandes de papier absorbant (1, 2 ; 3, 4) collées entre elles avec une colle à froid la somme des surfaces des collages créées entre les bandes de papier absorbant (1,2; 3, 4) par la colle à froid étant comprise entre 2 % et 50 %, de préférence entre 5 % et 30 % et plus préférablement entre 8 et 20 %.

13. Papier absorbant multicouche selon l'une, quelconque des revendications 10 à 12, **caractérisé en ce qu'**au moins une des couches intermédiaires (A, B) comprend trois bandes de papier absorbant.

14. Papier absorbant multicouche selon l'une quelconque des revendications 10 à 13, **caractérisé en ce qu'**au moins une des couches intermédiaires est pré-gaufrée.

15. Papier absorbant multicouche selon l'une quelconque des revendications 10 à 14, **caractérise en ce que** le stratifié d'au moins deux couches intermédiaires comporte une liaison des couches intermédiaires entre elles par un gaufrage comportant un décor.

16. Papier absorbant multicouche selon l'une quelconque des revendications 10 à 15. **caractérisé en ce que** la première couche intermédiaire (A) est micro-gaufrée., de préférence en approximativement 40 points/cm² et que la deuxième couche intermédiaire est gaufrée en volume et que la stratification des couches intermédiaires pré-collées et pré-gaufrées est une liaison des couches par un gaufrage comportant un décor.
